# EUROPÄISCHE PATENTSCHRIFT

(11) **EP 4 468 482 B1**
(45) Veröffentlichungstag und Bekanntmachung des Hinweises auf die Patenterteilung: **23.07.2025**
(21) Anmeldenummer: 23175118.1
(22) Anmeldetag: 24.05.2023
(51) Int. Cl.: H01M 50/249, B60L 50/64, B60K 1/04, B60L 50/60, H01M 50/242, H01M 50/262

(54) **BATTERIETRÄGER**
BATTERY SUPPORT
SUPPORT DE BATTERIE

(43) Veröffentlichungstag der Anmeldung: 27.11.2024
(73) Patentinhaber: Benteler Automobiltechnik GmbH, 33102 Paderborn (DE)
(72) Erfinder: HANDING, Christian, DE - 33449 Langenberg (DE); MICHEL, Kai, DE - 33154 Salzkotten (DE); SCHMITZ, Stefan, DE - 33739 Bielefeld (DE)
(74) Vertreter: Ksoll, Peter

(56) Entgegenhaltungen:
- DE-A1- 102012 220 074
- DE-A1- 102017 100 612
- DE-A1- 102018 218 372
- JP-A- 2016 137 754
- US-A1- 2017 305 251

## Beschreibung

Die Erfindung betrifft einen Batterieträger gemäß den Merkmalen im Oberbegriff von Anspruch 1.

Zur Halterung von Batterieelementen für die Bereitstellung elektrischer Energie in elektrisch angetriebenen Fahrzeugen werden Batterieträger verwendet, die zwischen den Achsen des Fahrzeugs angeordnet sind. Zu den wesentlichen sicherheitstechnischen Anforderungen an einen Batterieträger gehört eine gute Crashperformance. Um diesen zu genügen ist die Batteriewanne durch eine äußere Verstärkungsstruktur geschützt.

Durch die DE 10 2018 126 068 A1 zählt ein Batterieträger für ein Elektrofahrzeug zum Stand der Technik. Der Batterieträger weist eine Batteriewanne auf, die in einen äußeren Rahmen eingesetzt ist und durch einen Deckel verschlossen ist. Der Rahmen ist im Querschnitt aus mindestens zwei miteinander gefügten Profilbauteilen hergestellt, wobei mindestens eines dieser Profilbauteile als Blechumformbauteil hergestellt ist.

Auch bei dem aus der DE 10 2016 120 826 B4 bekannten Batterieträger ist die Batteriewanne durch eine diese außenseitig umgebende, eine Hohlkammer aufweisende Rahmenstruktur geschützt.

Die DE 10 2018 120 371 B4 offenbart einen Batterieträger mit einer äußeren Verstärkung durch eine Rahmenstruktur, die aus mehreren, im Bereich ihrer Enden miteinander verbundenen Hohlkammerprofilteilen zusammengesetzt ist.

Weiterhin beschreibt die WO 2018/166895 A1 einen Batterieträger zur Aufnahme von Batterieelementen mit einem einen Innenbereich bildenden Rahmen, welcher zumindest teilweise Seitenwände des Batterieträgers bereitstellt und einer Verstärkungsstruktur, die ein oder mehrere Verstärkungsprofile umfasst.

Aus der US 2017/305251 A1 geht ein Batterieträger mit einer Verstärkungsstruktur hervor. Die Verstärkungsstruktur weist ein Innenprofil und ein Außenprofil auf, die durch zwei Schwellerschalen gebildet sind, welche zur Befestigung des Batterieträgers dienen.

Auch die DE 10 2012 220 074 A1 offenbart einen Batterieträger mit einer Batteriewanne und einer Verstärkungsstruktur, die außenseitig vor einer Seitenwand der Batteriewanne angeordnet ist und ein Innenprofil und ein Außenprofil umfasst.

Eine solche Ausgestaltung eines Batterieträgers geht auch aus der JP 2016 137754 A hervor.

In der DE 10 2017 100 612 A1 wird ein Batterieträger mit einer Abstandshülse zwischen dem Boden einer Batteriewanne und einem die Batteriewanne verschließenden Deckel beschrieben.

Eine Fahrzeugkarosserieseitenverstärkungsstruktur geht aus der DE 10 2018 218 372 A1 hervor. Diese kann mit einem Batteriegehäuse verbunden sein. Weiterhin ist ein Seitenschweller vorgesehen, in welchen eine Rohrmutter integriert sein kann, die mit einem Eingriffsbolzen in Eingriff gebracht werden kann.

Die Batterieträger müssen mechanisch stabil sein und an der Karosserie bzw. am Fahrgestell eines Fahrzeugs befestigt werden. Die Batteriewanne soll weitestgehend in die Karosserie integriert werden, wodurch sich konstruktive und montagetechnische Herausforderungen stellen.

Der Erfindung liegt ausgehend vom Stand der Technik die Aufgabe zugrunde, einen in seiner Funktionalität und Crashperformance verbesserten Batterieträger zu schaffen, wobei die Funktionalität insbesondere hinsichtlich der Festlegung des Batterieträgers an Seitenschwellern und gegebenenfalls Bodenquerträgern im Kraftfahrzeug verbessert werden soll.

Die Lösung dieser Aufgabe besteht nach der Erfindung in einem Batterieträger gemäß Anspruch 1.

Ein Batterieträger zur Halterung von Batterieelementen für die Bereitstellung elektrischer Energie in elektrisch angetriebenen Fahrzeugen weist eine Batteriewanne mit einer Verstärkungsstruktur auf, die außenseitig vor zumindest einer Seitenwand der Batteriewanne angeordnet ist.

Die Verstärkungsstruktur umfasst ein Innenprofil und ein Außenprofil. Das Innenprofil ist im Querschnitt U-förmig konfiguriert und weist einen Steg und zwei Schenkel sowie eine Öffnung auf. Der Steg ist parallel zur Seitenwand orientiert. Die Schenkel des Innenprofils weisen von der Batteriewanne weg, so dass die offene Seite des Innenprofils außen liegt. Die offene Seite bzw. die Öffnung des Innenprofils ist zumindest längenabschnittsweise durch das Außenprofil geschlossen.

Diese Ausgestaltung führt zu einem funktional und hinsichtlich der Crashperformance, insbesondere im Steifigkeitsverhalten, verbesserten Batterieträger. Das Innenprofil ist über die Öffnung und die nach außen von der Batteriewanne weg gerichtete offene Seite des Innenprofils gut zugänglich. Hierdurch wird die Funktionalität, insbesondere die Zugänglichkeit und die Montage des Innenprofils selbst ebenso wie vom in Innenprofil zu montierenden Bauteilen verbessert. Das Innenprofil und das Außenprofil ergänzen sich synergistisch. Die Verstärkungsstruktur erstreckt sich in Längsrichtung der Seitenwand. Das Innenprofil und das Außenprofil bilden zumindest auf dem überwiegenden Teil der Länge der Verstärkungsstruktur ein kastenförmiges Hohlprofil. Dieses zeichnet sich durch ein vorteilhaftes statisches und dynamisches Belastungsverhalten auf. Insbesondere ist die Steifigkeit der Verstärkungsstruktur quer zur Batteriewanne verbessert. Dabei können die Schenkel des Innenprofils bei einem Seitenaufprall unter Energieabbau deformieren, wobei das Außenprofil als Zugstrebe fungiert und die Schenkel noch zueinander in Position hält.

Längenabschnittsweise geschlossen bedeutet, dass die Öffnung des Innenprofils auf der gesamten Länge des Innenprofils durch ein Außenprofil geschlossen sein kann. Das Außenprofil kann die Öffnung auch nur auf einem Längenabschnitt des Innenprofils verschließen. Auch können mehrere Außenprofile vorgesehen sein, welche die Öffnung des Innenprofils zumindest auf dem überwiegenden Teil der Länge verschließen. Auch kann ein Außenprofil insbesondere zur Gewichtseinsparung gelocht ausgebildet sein bzw. mit Löchern und Aussparungen versehen sein. Insbesondere kann das Außenprofil ovale oder rechteckförmige Löcher bzw. Ausnehmungen aufweisen. Rechteckförmige Löcher bzw. Ausnehmungen besitzen insbesondere gerundete Eckbereiche. Solche als Langlöcher ausgebildete ovale oder rechteckförmige Löcher bzw. Ausnehmungen besitzen vorzugsweise eine Abmessung zwischen 20 x 80 mm und 60 x 80 mm.

Löcher bzw. Ausnehmungen im Außenprofil können auch zum Fügen der Verstärkungsstruktur mit der Seitenwand der Batteriewanne dienen.

In der Verstärkungsstruktur ist erfindungsgemäß zumindest eine Hülse vorgesehen. Hierbei handelt es sich um Befestigungs- bzw. Montagehülsen. Üblicherweise sind in Längsrichtung der Verstärkungsstruktur mehrere mit einem Abstand zueinander angeordneten Hülsen vorgesehen. Eine Hülse erstreckt sich zwischen den Schenkeln des Innenprofils über die gesamte Höhe des Innenprofils. Die Hülse verbindet Öffnungen in den Schenkeln. Die Hülsen sind koaxial zu den Öffnungen orientiert. Hülse und Öffnung liegen auf einer gemeinsamen Längsachse. Die Hülsen dienen zur Durchführung von Befestigungsmitteln, über welche der Batterieträger in der Karosserie bzw. dem Chassis eines Fahrzeugs festgelegt wird. Über die Hülsen und geeignete Befestigungsmittel erfolgt eine Festlegung des Batterieträgers an Seitenschwellern und gegebenenfalls Bodenquerträgern im Kraftfahrzeug.

Eine vorteilhafte Ausgestaltung sieht vor, dass die Hülsen einen oberen und/oder einen unteren Kragen aufweisen. Ein Kragen ist vom Hülsenkörper nach auswärts orientiert. Der Kragen kann werkstoffeinheitlicher Bestandteil der Hülse sein oder durch einen separaten Kragenkörper gebildet sein. Die Kragen nehmen die Reib- und Druckkräfte auf, die beim Anziehen von durch die Hülsen geführten Montageelementen, beispielsweise Schraubverbindungselementen, entstehen. Hierdurch kann die Oberfläche der Bauteile im Bereich einer Schraubverbindung vor Beschädigungen geschützt und die Flächenpressung reduziert werden. Insbesondere gewährleisten die Kragen einen Toleranzausgleich. Die ebene Kragenfläche ist größer als die Hülsenfläche, so dass eine horizontale Ausrichtung bzw. Positionierung der Hülsen bzw. deren Hülsenkörper vor dem Schweißen mit dem Innenprofil erfolgen kann. Die Ausrichtung erfolgt entsprechend der definierten seitlichen Schwellerlochabstände.

Eine Hülse bzw. der Hülsenkörper einer Hülse kann mehrteilig ausgeführt sein. Insbesondere kann eine Hülse zweiteilig, also aus zwei Hülsenkörperteilen, zusammengesetzt sein. Insbesondere erfolgt das Zusammenfügen der beiden Hülsenkörperteile bei der Montage in der Verstärkungsstruktur.

Die Hülsen können mit ihren Kragen innen an der Innenseite eines Schenkels des Innenprofils anliegen. Eine für die Praxis besonders vorteilhafte Ausgestaltung sieht vor, dass die Hülsen außenseitig an den Schenkeln anliegen. In diesem Zusammenhang sind insbesondere zweiteilige Hülsen vorteilhaft. Eine zweiteilige Hülse weist zwei Hülsenkörperteile auf. Ein Hülsenkörperteil wird jeweils von außen durch eine Öffnung in einem Schenkel hindurchgeführt, so dass die Kragen außen an den Innenschenkeln anliegen. Eine Fügung der Hülsen mit dem Innenprofil erfolgt dann im Bereich der Kragen. Des Weiteren werden die beiden Hülsenkörperteile im Inneren des Innenprofils zusammengeführt und miteinander gefügt. Dies kann kraft- und/oder formschlüssig erfolgen. Die Fügung zwischen den beiden Hülsenkörperteilen kann durch eine Verzahnung oder auch durch einen Presssitz erfolgen. Auch eine bajonettartige Verbindung ist möglich.

Eine zweiteilige Hülse ist vorteilhaft hinsichtlich der Montage. Jeweils ein Hülsenkörperteil wird durch eine obere bzw. untere Schenkelöffnung geführt und teilüberlappend insbesondere mittels Presssitz verbunden. Im Innenprofil positioniert werden die Hülsen über die Kragen mit dem Innenprofil bzw. den Schenkeln des Innenprofils verschweißt.

Eine Hülse kann auch durch eine Innenhülse und eine Außenhülse gebildet sein.

Endseitig der Schenkel des Innenprofils sind Fügelaschen vorgesehen. Vorzugsweise sind mehrere mit Abstand zueinander angeordnete Fügelaschen in Längsrichtung des Innenprofils entlang von Längskantenabschnitten der Schenkel vorgesehen. Die Fügelaschen stehen nach außen gerichtet vor. Vorzugsweise ist an jedem Schenkel entlang seines Längskantenabschnitts eine alternierende Reihe von Fügelaschen vorgesehen. Die Fügelaschen liegen in Längsrichtung eines Schenkels mit Abstand zueinander, so dass jeweils zwischen den Fügelaschen Freiräume vorhanden sind.

Das Außenprofil stützt sich an den freien Enden bzw. den Längskantenabschnitten der Schenkel und/oder an den Fügelaschen der Schenkel ab.

Vorzugsweise ist eine Fügelasche in einem Winkel zu einem Schenkel angestellt. Insbesondere sind die Fügelaschen vom freien Ende der Schenkel weg nach außen gerichtet. Hierdurch wird die Zugänglichkeit verbessert, insbesondere für die Herstellung von Punktschweißverbindungen. Auch wird der benötigte Bauraum nach außen hin verringert.

Das Außenprofil weist Fügestege auf, welche sich an den Schenkeln des Innenprofils abstützen. Insbesondere liegt das Außenprofil mit Fügestegen bereichsweise an den Fügelaschen an.

Das Außenprofil ist mit dem Innenprofil stoffschlüssig verbunden. Dies erfolgt über eine stoffschlüssige Fügung zwischen den Fügelaschen des Innenprofils und den Fügestegen des Außenprofils. Insbesondere erfolgt die stoffschlüssige Fügung zwischen Fügelaschen und Fügesteg durch eine Punktschweißverbindung oder ein Punktschweißkleben. Diese Fügetechniken gewährleisten einen geringen Wärmeeintrag in die Bauteile beim stoffschlüssigen Fügen. Grundsätzlich ist auch ein Rollnahtschweißen oder ein Laserschweißen möglich.

Eine weitere vorteilhafte Ausgestaltung sieht vor, dass obere und untere Fügelaschen vorgesehen sind. Eine obere Lasche befindet sich endseitig am oberen Schenkeln des Innenprofils. Eine untere Fügelasche befindet sich endseitig am freien Ende des unteren Schenkels des Innenprofils. Die obere Fügelasche und die untere Fügelasche sind jeweils vom zugehörigen oberen Schenkel bzw. unteren Schenkel nach außen in einem Winkel orientiert. Hierbei sind die obere Fügelasche und die untere Fügelasche voneinander wegweisend gerichtet.

Die obere Fügelaschen und die unteren Fügelaschen sind zueinander in einem Laschenöffnungswinkel angeordnet. Der Laschenöffnungswinkel kann zwischen größer gleich (≥) 45° und kleiner gleich (≤) 240° bemessen. Vorzugsweise liegt der Laschenöffnungswinkel in einer Spanne zwischen jeweils einschließlich 80° und 150° Insbesondere ist der Laschenöffnungswinkel zwischen jeweils einschließlich 60° und 120° bemessen.

Die Fügelaschen am Innenprofil und die Fügestege des Außenprofils sind konturmäßig aneinander angepasst und ergänzen sich komplementär. Besonders vorteilhaft sind die Fügelaschen und die Fügestege gleichwinklig angestellt und zueinander komplementär ausgerichtet.

Eine für die Praxis besonders vorteilhafte Ausführungsform sieht vor, dass in der Verstärkungsstruktur Einbauelemente vorgesehen sind. Einbauelemente könnten Lastleitkörper, Schottbleche und ähnliche innenliegende Verstärkungs- und/oder Funktionsbauteile sein.

Die Verstärkungsstruktur ist mit der Batteriewanne verbunden. Hierzu ist das Innenprofil mit der Batteriewanne gefügt. Insbesondere ist das Innenprofil mit seinem rückseitigen Steg an einer Seitenwand der Batteriewanne anliegend gefügt. Das offene Innenprofil ist von der Seite aus vorteilhaft zugänglich. In das offene Innenprofil können die Hülsen ebenso wie weitere Einbauelemente eingebracht und montiert werden. Anschließend wird das Innenprofil durch ein oder mehrere Außenprofile verschlossen. Das oder jedes Außenprofil ist mit dem oberen Schenkel und dem unteren Schenkel verbunden und fungiert als Zuglaststrebe zwischen den Schenkeln, die einem Aufspreizen des Innenprofils bei einem Seitenanprall entgegen wirkt.

Zwischen den Fügelaschen an den Schenkeln des Innenprofils sind Ausschnitte oder Aussparungen vorgesehen. Auch kann die Kontur der Schenkel auf die Anbindung an Fügeflächen abgestimmt sein. Eine Ausgestaltung sieht in diesem Zusammenhang vor, dass das Innenprofil bereichsweise im Bereich eines Einbauelements und/oder im Bereich einer Hülse verprägt bzw. eingezogen ist.

Neben Einbauelementen in der Verstärkungsstruktur können auch in der Batteriewanne Verstärkungs- bzw. Versteifungselemente integriert sein. Solche Verstärkungs- bzw. Versteifungselemente können durch Längs- und oder Querprofile bzw. -streben gebildet sein, die sich am Wannenboden erstrecken.

Weiterhin kann ein Deckel den oberen Abschluss der Batteriewanne bilden. Besonders vorteilhaft ist der Batterieträger dafür ausgelegt und bestimmt, in die Karosserie bzw. dem Chassis eines Fahrzeugs integriert zu werden. Der Batterieträger bildet dabei ein tragendes Teil der Karosserie (Cell-to-Body). Hierbei kann der Fußboden des Fahrzeugs den Batteriedeckel bilden.

Die Batteriewanne ist insbesondere ein einstückig und werkstoffeinheitlich ausgeführtes Tiefziehteil. Auch das Innenprofil und das Außenprofil können pressformtechnisch bzw. tiefzieh-technisch hergestellt sein. Durch seinen U-förmigen Querschnitt besitzt das Innenprofil einen kanalartigen Verlauf, in welchem in Längsrichtung mit Abstand zueinander mehrere Hülsen angeordnet sind. Das zumindest eine Außenprofil verschießt das Innenprofil schließblechartig auf zumindest einem Teil seiner Länge. In Längsrichtung der Verstärkungsstruktur können mehrere Außenprofile vorgesehen sein. Das eine Außenprofil oder die mehreren Außenprofile bilden die Außenwand der Verstärkungsstruktur.

Die Batteriewanne kann auch aus einer Blechplatine falttechnisch zur Batteriewanne geformt sein. Hierzu wird eine Blechplatine bereitgestellt, deren Geometrie der Abwicklung der Batteriewanne entspricht. Eine Kühlplatte kann optional direkt mit der Blechplatine gefügt werden, bevor diese dann falttechnisch zur Batteriewanne geformt wird. Die Batteriewanne ist als Faltbauteil ausgeführt. Faltecken der Batteriewanne sind gefügt und abgedichtet.

Die Batteriewanne ebenso wie die Verstärkungsstruktur und die die Verstärkungsstruktur bildenden Bauteile, insbesondere die Innenschale, aber auch die Außenschale, können durch Formhärten von Stahlblechen gebildet sein. Das Formhärten wird auch als Presshärten bezeichnet. Beim Formhärten wird ein Blech aus einem Mangan-Bor-Stahl auf eine Temperatur oberhalb der spezifischen Austenitisierungstemperatur des Werkstoffs erwärmt, in ein Umformwerkzeug eingelegt und zum Formbauteil warm umgeformt, wobei es während der Formgebung abkühlt. Im Umformwerkzeug eingespannt werden die Formbauteile durch die Kühlung gehärtet.

Hierbei können auch beschichtete formhärtbare Stahlbleche zum Einsatz gelangen, insbesondere handelt es sich hierbei um mit einer Aluminium/Silizium-Beschichtung versehene Mangan-Bor-Stahlbleche. Die Bauteile der Verstärkungsstruktur und der Batteriewanne weisen Zugfestigkeiten von 1.000 MPa und höher auf.

Die Batteriewanne ebenso wie das Innenprofil und/oder das Außenprofil der Verstärkungsstruktur können auch aus extra- und ultrahochfesten Kaltformstählen gefertigt sein. Die Bauteile weisen eine Zugfestigkeit von mehr als 980 MPa auf, insbesondere weist das Innenprofil eine Zugfestigkeit von ≥ 1.180 MPa auf.

Grundsätzlich ist in beiden Fällen für die Batteriewanne sowie für das Innenprofil und/oder das Außenprofil auch der Einsatz von tailored blanks verschiedener Blechdicke, Stahlgüte oder auch von Technologien zur Erstellung maßgeschneideter Festigkeitseigenschaften mit lokalen weichen Bereichen (soft zones) möglich, beispielsweise zur Risspräventation beim Schweißen oder zur gezielten Einstellung lokal geschwächter Zonen mit besserem Deformationsvermögen zur Energieabsorption.

Die Erfindung ist nachfolgend anhand von in den Zeichnungen dargestellten Ausführungsbeispielen näher beschrieben. Es zeigen:
- Figur 1: einen erfindungsgemäßen Batterieträger in einer Querschnittsdarstellung;
- Figur 2: den Batterieträger in einer schematisierten Draufsicht,
- Figur 3: einen Querschnitt durch die Verstärkungsstruktur des Batterieträgers gemäß der Darstellung von Figur 2 entlang der Linie A-A;
- Figur 4: einen Querschnitt durch die Verstärkungsstruktur des Batterieträgers gemäß der Darstellung von Figur 2 entlang der Linie B-B;
- Figur 5: einen Querschnitt durch die Verstärkungsstruktur des Batterieträgers gemäß der Darstellung von Figur 2 entlang der Linie C-C;
- Figur 6: einen Querschnitt durch die Verstärkungsstruktur des Batterieträgers gemäß der Darstellung von Figur 2 entlang der Linie D-D;
- Figur 7: einen Ausschnitt aus der Verstärkungsstruktur des Batterieträgers im Bereich einer Montagehülse in einer Perspektive;
- Figur 8: eine Seitenansicht auf die Darstellung entsprechend Figur 7;
- Figur 9: die Darstellung entsprechend der Figur 7 in einer perspektivischen Ansicht schräg von vorne;
- Figur 10: eine weitere Ausführungsform eines erfindungsgemäßen Batterieträgers in einer Querschnittsdarstellung;
- Figur 11: den Batterieträger gemäß der Darstellung von Figur 10 in einer schematisierten Draufsicht;
- Figuren 12 bis 15: jeweils einen technisch schematisiert dargestellten Querschnitt durch weitere Ausführungsformen einer Verstärkungsstruktur;
- Figur 16: einen Ausschnitt aus einem Verstärkungsprofil mit der Darstellung des Fügebereichs zwischen dem Innenprofil und dem Außenprofil;
- Figuren 17 bis 19: jeweils einen technisch schematisiert dargestellten Querschnitt durch eine Ausführungsform einer Verstärkungsstruktur;
- Figur 20: eine Ansicht auf eine weitere Ausführungsform einer Verstärkungsstruktur und
- Figur 21: die Darstellung gemäß der Figur 20 in einem Querschnitt.

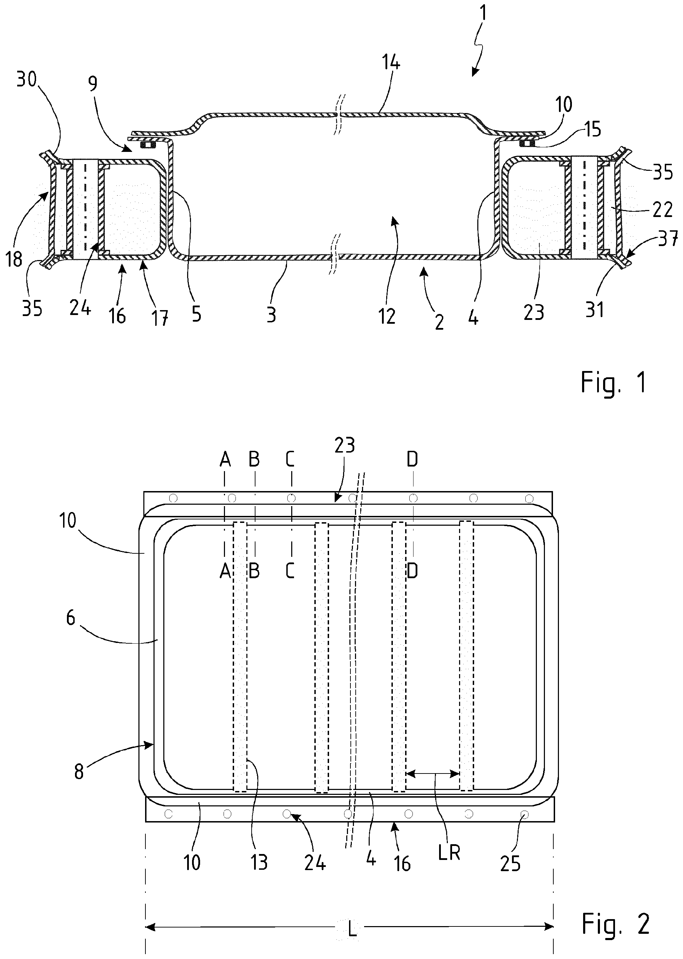

In den Figuren 1 bis 21 werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

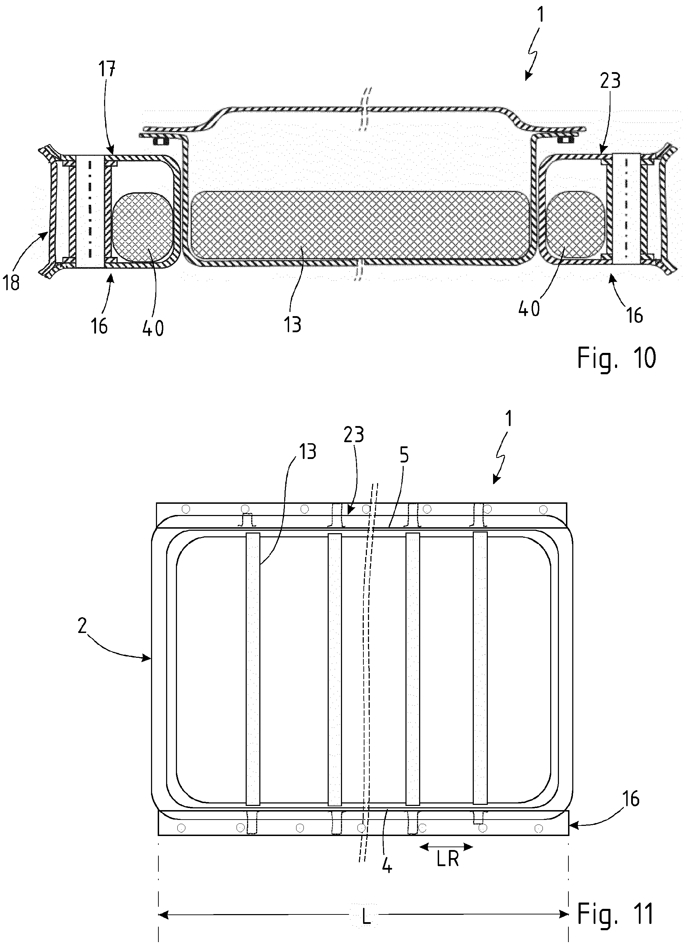

Die Figuren 1 und 2 ebenso wie die Figuren 10 und 11 zeigen einen erfindungsgemäßen Batterieträger 1 sowie Bauteile davon.

Der Batterieträger 1 weist eine aus einem Stahlblech tiefgezogene Batteriewanne 2 auf. Die Batteriewanne 2 ist im Querschnitt rechteckig konfiguriert und weist einen Wannenboden 3 sowie Seitenwände, nämlich jeweils zwei Längswände 4, 5 und zwei Stirnwände 6, 7 auf, die sich zu einer umlaufenden Wannenwand 8 ergänzen. Am oberen Wannenrand 9 erstrecken sich entlang der Längswände 4, 5 und der Stirnwände 6, 7 nach außen gerichtete Flanschabschnitte 10, die sich ebenfalls umlaufend geschlossen zu einem oberen Flansch 11 ergänzen. Die Wannenwand 8 begrenzt einen Wanneninnenraum 12 der Batteriewanne 2.

Im Wanneninnenraum 12 sind, optional und wie in der Figur 2 andeutungsweise und den Figuren 10 und 11 schematisiert dargestellt, eine Mehrzahl von Innenstreben 13 angeordnet. Die Innenstreben 13 erstrecken sich auf dem Wannenboden 3 quer zwischen den Längswänden 4, 5 und sind stoffschlüssig in der Batteriewanne 2 festgelegt.

Oberseitig ist die Batteriewanne 2 durch einen Deckel 14 verschlossen, der randseitig auf dem Flansch 11 aufliegt. In den dargestellten Ausführungsbeispielen ist der Deckel 14 lösbar mittels Schraubverbindungsmitteln 15 mit der Batteriewanne 2 verbunden.

Der Batterieträger 1 weist eine Verstärkungsstruktur 16 auf. Die Verstärkungsstruktur 16 erstreckt sich jeweils außenseitig der Batteriewanne 2 vor den Längswänden 4, 5.

Wie insbesondere die Figuren 1 sowie die Figuren 3 bis 6 und die die Figur 10 zeigen, weist eine Verstärkungsstruktur 16 ein Innenprofil 17 und ein Außenprofil 18 auf. Das Innenprofil 17 ist im Querschnitt U-förmig konfiguriert und weist einen rückwärtigen Steg 19 sowie zwei Schenkel 20, 21 und eine außenseitige Öffnung 22 auf. Die Schenkel 20, 21 des Innenprofils 17 sind von der Batteriewanne 2 weg gerichtet. Der Steg 19 erstreckt sich parallel zur Seitenwand bzw. jeweils einer Längswand 4, 5. Die Öffnung 22 des Innenprofils 17 ist durch das Außenprofil 18 zumindest längenabschnittsweise geschlossen.

Sowohl das Innenprofil 17 als auch das Außenprofil 18 sind Blechformteile, die aus Stahlblechen geformt sind. Es kann sich um formgehärtete Stahlblechbauteile oder um kaltgeformte Formbauteile aus insbesondere ultrahochfesten (UHSS) Kaltformstählen handeln.

Die Verstärkungsstruktur 16 erstreckt sich in Längsrichtung LR einer Längswand 4, 5. Das Innenprofil 17 und das Außenprofil 18 bilden zumindest auf dem überwiegenden Teil der Länge L der Verstärkungsstruktur 16 ein Hohlprofil 23.

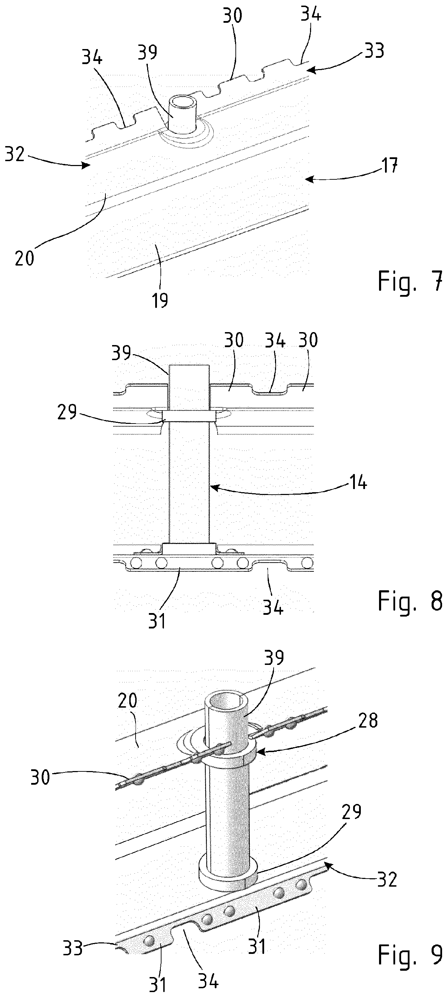

Im Hohlprofil 23 der Verstärkungsstruktur 16 sind mehrere Hülsen 24 vorgesehen. Diese erstrecken sich vertikal zwischen den Schenkeln 20, 21 des Innenprofils 17. In dem oberen Schenkel 20 und dem unteren Schenkel 21 sind jeweils Öffnungen 25, 26 vorgesehen, welche durch die Hülsen 24 verbunden werden (siehe hierzu auch die Figuren 7 bis 9). Die Hülsen 24 weisen einen Hülsenkörper 27 auf. Ober- und unterseitig der Hülsen 24 ist jeweils ein Kragen 28 vorgesehen, der durch einen Scheibenkörper 29 gebildet ist. Die Öffnungen 25, 26 im oberen Schenkel 20 und im unteren Schenkel 21, die Hülsen 24 und die Scheibenkörper 29 liegen jeweils auf einer gemeinsamen Hülsenlängsache LH und sind konzentrisch zu dieser angeordnet.

Endseitig der Schenkel 20, 21 sind Fügelaschen 30, 31 vorgesehen. Die Fügelaschen 30, 31 erstrecken sich von den Enden 32 an Längskantenabschnitten 33 eines Schenkels 20, 21 nach außen. Die Fügelaschen 30, 31 sind in einem Winkel α zu dem zugehörigen Schenkel 20, 21 angestellt, an welchen sie sich anschließen. In den Figuren 7 und 9 erkennt man, dass die äußeren Längskantenabschnitte 33 an den Enden 32 der Schenkel 20, 21 gegenüber den Schenkeln 20, 21 abgewinkelt sind. Die Fügelaschen 30, 31 verlaufen entlang der Längskantenabschnitte 33 und stehen gegenüber diesen vor.

Am oberen Schenkel 20 sind obere Fügelaschen 30 vorgesehen. Am unteren Schenkel 21 sind untere Fügelaschen 31 vorgesehen. In Längsrichtung LR der Schenkel 20, 21 entlang der Länge des Innenprofils 17 ist eine Mehrzahl von Fügelaschen 30, 31 alternierend angeordnet (siehe hierzu Figuren 7 bis 9). Zwischen den einzelnen Fügelaschen 30, 31 befinden sich Freiräume 34. Die oberen Fügelaschen 30 am oberen Schenkel 20 und die unteren Fügelaschen 31 am unteren Schenkel 21 sind voneinander weg weisend gerichtet.

Das Außenprofil 18 weist Fügestege 35, 36 auf. Diese erstrecken sich jeweils entlang der äußeren Längsränder 37 des Außenprofils 18. Mit den Fügestegen 35, 36 liegt das Außenprofil 18 im Bereich einer Fügelasche 30, 31 an. Im Bereich der Freiräume 34 liegt das Außenprofil 18 mit den äußeren Fügestegen 35, 36 jeweils an einem Schenkel 20, 21 eines Innenprofils 17 an dessen Längskanten 33 an. Die Fügelaschen 30, 31 und die Fügestege 35, 36 sind kongruent zueinander ausgebildet.

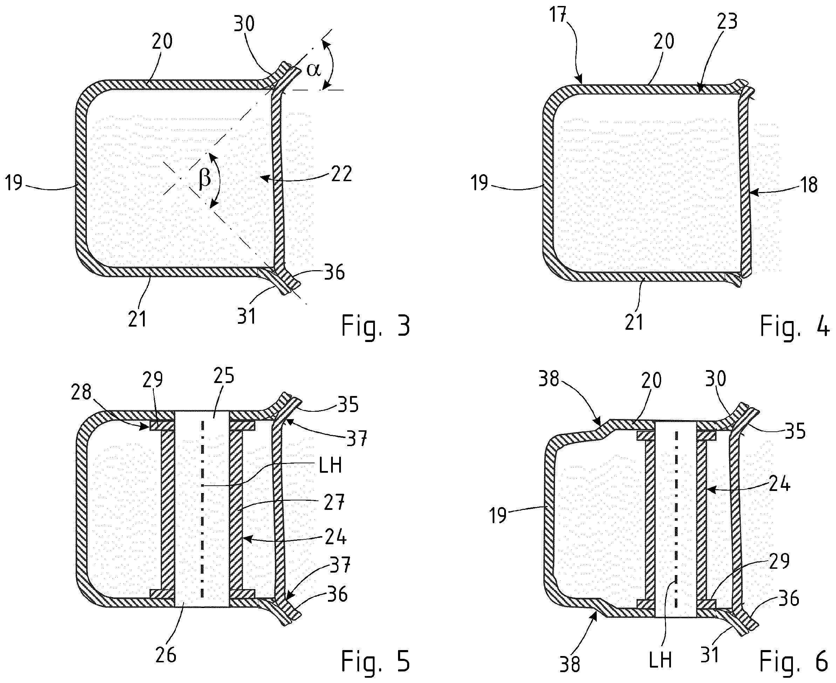

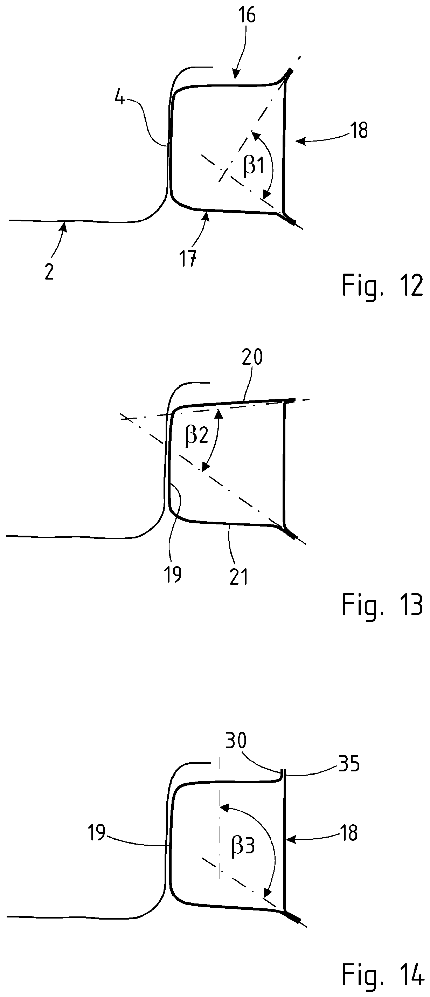

Die oberen Fügelaschen 30 und die unteren Fügelaschen 31 sind zueinander in einem Laschenöffnungswinkel β angeordnet (siehe hierzu insbesondere Figur 3 sowie die Figuren 12 bis 15). Der Laschenöffnungswinkel β ist zwischen größer oder gleich (≥) 45° und kleiner oder gleich (≤) 200° bemessen. Die Darstellung der Figuren 12 bis 15 zeigen verschiedene Ausführungsvarianten einer Verstärkungsstruktur 16 und die sich durch die Ausrichtung der Fügelaschen 30, 31 und der Fügestege 35, 36 relativ zueinander ergebenden Laschenöffnungswinkel β.

Bei der Darstellung der Figur 12 beträgt der Laschenöffnungswinkel β1 ca. 95°.

Die Darstellung der Figur 13 zeigt eine Verstärkungsstruktur 16 mit einem Laschenöffnungswinkel β2 zwischen den Fügelaschen 30, 31 und den Fügestegen 35, 36 von 40° +/- 2°.

Der Laschenöffnungswinkel β3 bei der Ausführungsform des Innenprofils 17 und des Außenprofils 18 bei der Verstärkungsstruktur 16 gemäß der Darstellung von Figur 14 beträgt etwa 125°.

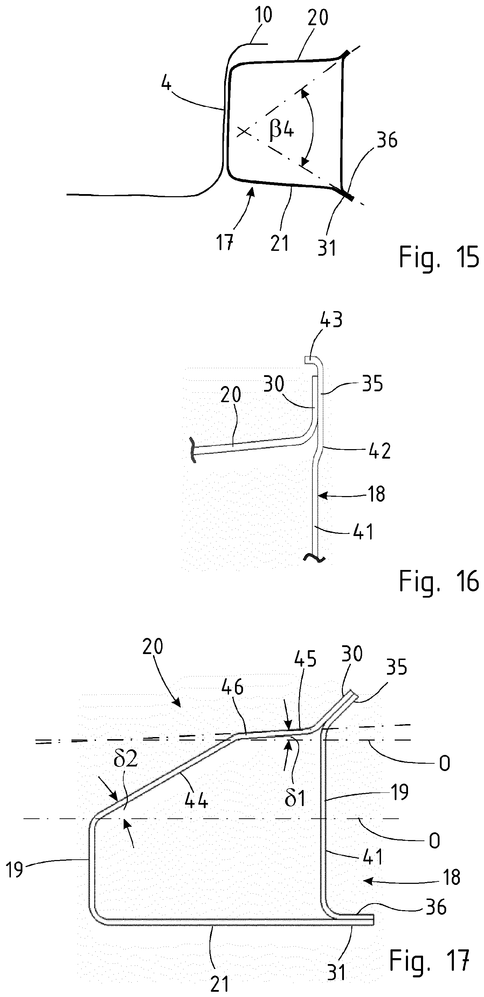

Der Laschenöffnungswinkel β4 der Verstärkungsstruktur 16 gemäß der Darstellung von Figur 15 beträgt ca. 67°.

In den Figuren 3 bis 5 sind Querschnitte durch die Verstärkungsstruktur 16 des Batterieträgers 1 entlang der Linien A-A, B-B, C-C und D-D dargestellt.

Der Laschenöffnungswinkel β, wie der Figur 3 zu entnehmen, beträgt 90°. Die Figur 4 zeigt einen Querschnitt durch die Verstärkungsstruktur 16 in einem Bereich, in welchem die Fügelaschen 30, 31 in einen Freiraum 34 übergehen.

Die Figuren 5 und 6 verdeutlichen, dass Hülsen 24 eingesetzt sind, welche im Durchmesser verschieden groß bemessen sind.

Anhand der Figur 6 ist ferner zu erkennen, dass der Verlauf der Schenkel 20, 21 quer zur Längsrichtung des Innenprofils 17 eine von einem gradlinigen Verlauf abweichende Kontur haben kann. Ein hinterer Teil ist durch eine Umstellung 38 verkröpft.

Wie insbesondere in der Figur 9 zu erkennen, können die Hülsen 24 auch mit Hülsenabschnitten 39 außen gegenüber der Verstärkungsstruktur 16 und insbesondere oberhalb des oberen Schenkels 20 vorstehen.

In der Figur 10 ist schematisiert und vereinfacht dargestellt ein Einbauelement 40, welches in das Innenprofil 17 bzw. das Hohlprofil 23 der Verstärkungsstruktur 16 eingebaut ist. Solche Einbauelemente 39 können beispielsweise Lastleitkörper oder Schottbleche sein. Diese sind mit dem Innenprofil 17 gefügt, insbesondere stoffschlüssig gefügt.

Der Einbau der Hülsen 24 ebenso wie die Montage und Festlegung von Einbauelementen 40 erfolgt von außen bei offenem Innenprofil 17, bevor dieses durch das Außenprofil 18 zumindest längenabschnittsweise geschlossen wird. Hierzu wird das Außenprofil 18 ist mit dem Innenprofil 17 stoffschlüssig gefügt, insbesondere durch Punktschweißen. Dies erfolgt insbesondere zwischen den Fügelaschen 30, 31 und den Fügestegen 35, 36.

Die Figur 16 zeigt einen Ausschnitt aus einem Verstärkungsprofil 16. Endseitig des Schenkels 20 ist eine Fügelasche 30 vom Schenkel weg nach außen gerichtet abgekantet. Das Außenprofil 18 ist an der Fügelasche 30 gekoppelt. Das Außenprofil 18 weist einen äußeren Fügesteg 35 auf. Dieser ist gegenüber einem Mittelabschnitt 41 des Außenprofils 18 über eine Umstellung 42 leicht nach außen verkröpft. Am Außenrand weist das Außenprofil 18 bzw. der Fügesteg 35 eine in Richtung zum Schenkel 20 umgestellte Randleiste 43 auf. Der Fügesteg 35 liegt an der Fügelasche 30 an und ist mit dieser gefügt, insbesondere durch Punktschweißen oder Punktschweißkleben.

Bei dem in der Figur 17 dargestellten Querschnitt durch eine Verstärkungsstruktur 16 weist der obere Schenkel 20 zwei Schenkelabschnitte 44, 45 auf. Die Schenkelabschnitte 44, 45 sind relativ zueinander geneigt ausgerichtet.

Die Schenkelabschnitte 44, 45 sind über eine Biegung 46 verbunden. Zu einer mit dem Steg 19 gebildeten Orthogonale O verlaufen die Schenkelabschnitte 44, 45 geneigt. Der in Richtung zum Außenprofil 18 vordere Schenkelabschnitt 45 nimmt mit der Orthogonalen O einen Winkel δ1 ein. Der hintere Schenkelabschnitt 44 nimmt mit der Orthogonalen O einen Winkel δ2 ein. Öffnungsseitig schließt sich an den Schenkelabschnitt 45 eine auswärts umgestellte Fügelasche 30 an, an welche ein Fügesteg 35 des Außenprofils 18 anliegt und gefügt ist.

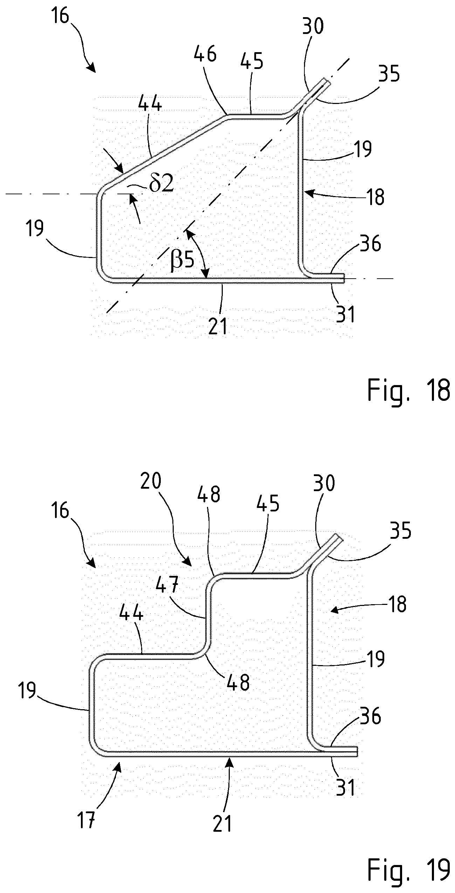

Der in der Figur 18 dargestellte Querschnitt einer Verstärkungsstruktur 16 entspricht im Wesentlichen derjenigen von Figur 17. Allerdings verläuft der vordere Schenkelabschnitt 45 parallel zum unteren Schenkel 21. Der Schenkelabschnitt 45 ist folglich geradlinig konform zum unteren Schenkel 21 ausgerichtet. Der hintere Schenkelabschnitt 44 verläuft geneigt zwischen dem Steg 19 und dem vorderen Schenkelabschnitt 45. Im dargestellten Ausführungsbeispiel beträgt der Neigungswinkel δ2 etwa 30 Grad.

Sowohl bei der Ausführungsform der Verstärkungsstruktur 16 gemäß der Darstellung von Figur 17 als auch der Figur 18 ist die untere Fügelasche 31 geradlinig in Verlängerung des unteren Schenkels 21 ausgerichtet. Der zugehörige Fügesteg 36 des Außenprofils 18, welcher mit der Fügelasche 31 in Kontakt steht und gefügt ist, ist entsprechend rechtwinklig vom Steg 19 des Außenprofils 18 abgekantet und verläuft parallel zur unteren Fügelasche 31. Der Laschenöffnungswinkel β5 zwischen der oberen Fügelasche 30 und der unteren Fügelasche 31 beträgt 45 Grad.

Bei dem in der Figur 19 dargestellten Querschnitt einer Verstärkungsstruktur 16 weist der obere Schenkel 20 drei Schenkelabschnitte 44, 45 und 47 auf. Die beiden Schenkelabschnitte 44, 45 sind parallel zum unteren Schenkel 21 orientiert. Der Schenkelabschnitt 47 verläuft senkrecht zum unteren Schenkel 21. Die Schenkelabschnitte 44, 45, 47 gehen jeweils über eine Krümmung bzw. Abkantung 48 ineinander über. Durch die Ausrichtung der Schenkelabschnitte 44, 45, 47 relativ zueinander wird im Schenkel 20 eine Stufe gebildet.

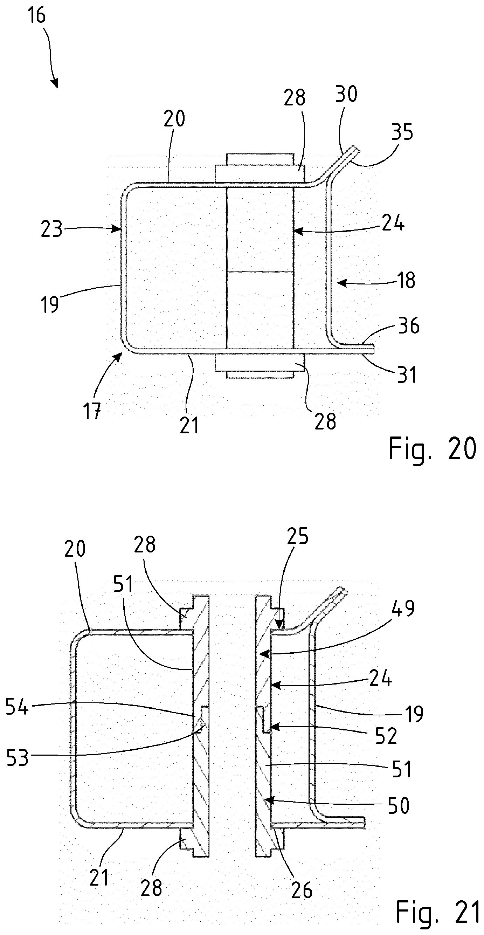

Die Ausführungsform der Verstärkungsstruktur 16, wie in den Figuren 20 und 21 dargestellt, entsprechen im grundsätzlichen Aufbau den zuvor beschriebenen.

Die Verstärkungsstruktur 16 weist ein Innenprofil 17 und ein Außenprofil 18 auf. Das Innenprofil 17 ist im Querschnitt U-förmig konfiguriert. U-förmig bedeutet, dass das Innenprofil 17 einen rückwärtigen Steg 19 und zwei Schenkel 20, 21 sowie eine Öffnung 22 aufweist, wobei die Schenkel 20, 21 und die Öffnung 22 des Innenprofils 17 von einer Batteriewanne weg weisen. Die Öffnung 22 des Innenprofils ist zumindest längenabschnittsweise durch das Außenprofil 18 geschlossen. Endseitig der Schenkel 20, 21 sind Fügelaschen 30, 31 vorgesehen, an welche Fügestege 35, 36 des Außenprofils anliegen und mit den Fügelaschen 30, 31 stoffschlüssig gefügt sind, insbesondere punktgeschweißt bzw. punktschweißgeklebt.

Im Hohlprofil 23 der Verstärkungsstruktur 16 ist eine Hülse 24 angeordnet. In Längsrichtung des Hohlprofils 23 bzw. der Verstärkungsstruktur 16 erstrecken sich mehrere solcher Hülsen 24 mit Abstand zueinander.

Die Hülse 24 erstreckt sich vertikal zwischen den Schenkeln 20, 21 des Innenprofils 17. Im oberen Schenkel 20 ist eine obere Öffnung 25 und im unteren Schenkel 21 ist eine untere Öffnung 26 eingebracht, welche durch die Hülse 24 verbunden sind.

Die Hülse 24 ist zweiteilig und weist einen ersten Hülsenkörperteil 49 und einen zweiten Hülsenkörperteil 50 auf. Jeder Hülsenkörperteil 49, 50 weist einen Hülsenabschnitt 51 auf, mit welchem der Hülsenkörperteil 49 bzw. 50 durch die Öffnung 25 bzw. 26 geführt ist. Endseitig besitzen die Hülsenkörperteile 49, 50 umlaufende Kragen 28, welche außenseitig am oberen Schenkel 20 bzw. unteren Schenkel 21 anliegen. Über die Kragen 28 ist die Hülse 24 bzw. die Hülsenkörperteile 49, 50 mit den Schenkeln 20, 21 gefügt.

Die Hülsenkörperteile 49, 50 sind untereinander über eine Formschlussverbindung 52 gekoppelt. Diese ist verzahnungsartig gestaltet. Hierzu weist der Hülsenabschnitt 51 des zweiten Hülsenkörperteils 50 einen inneren radialen Fortsatz 53 auf, der von einem äußeren Radialbund 54 des Hülsenabschnitts 51 am ersten Hülsenkörperteil 49 umgriffen ist.

### Bezugszeichen:

- 1 -: Batterieträger
- 2 -: Batteriewanne
- 3 -: Wannenboden
- 4 -: Längswand
- 5 -: Längswand
- 6 -: Stirnwand
- 7 -: Stirnwand
- 8 -: Wannenwand
- 9 -: oberer Wannenrand
- 10 -: Flanschabschnitt
- 11 -: oberer Flansch
- 12 -: Wanneninnenraum
- 13 -: Innenstrebe
- 14 -: Deckel
- 15 -: Schraubverbindung
- 16 -: Verstärkungsstruktur
- 17 -: Innenprofil
- 18 -: Außenprofil
- 19 -: Steg
- 20 -: Schenkel
- 21 -: Schenkel
- 22 -: Öffnung
- 23 -: Hohlprofil
- 24 -: Hülse
- 25 -: Öffnung
- 26 -: Öffnung
- 27 -: Hülsenkörper
- 28 -: Kragen
- 29 -: Scheibenkörper
- 30 -: Fügelasche
- 31 -: Fügelasche
- 32 -: Ende
- 33 -: Längskantenabschnitt
- 34 -: Freiraum
- 35 -: Fügesteg
- 36 -: Fügesteg
- 37 -: Längsrand
- 38 -: Umstellung
- 39 -: Hülsenabschnitt
- 40 -: Einbauelement
- 41 -: Mittelabschnitt
- 42 -: Umstellung
- 43 -: Randleiste
- 44 -: Schenkelabschnitt
- 45 -: Schenkelabschnitt
- 46 -: Biegung
- 47 -: Schenkelabschnitt
- 48 -: Abkantung
- 49 -: Hülsenkörperteil
- 50 -: Hülsenkörperteil
- 51 -: Hülsenabschnitt
- 52 -: Formschlussverbindung
- 53 -: Fortsatz
- 54 -: Radialbund

- α -: Winkel
- β -: Laschenöffnungswinkel
- β1 -: Laschenöffnungswinkel
- β2 -: Laschenöffnungswinkel
- β3 -: Laschenöffnungswinkel
- β4 -: Laschenöffnungswinkel
- β5 -: Laschenöffnungswinkel
- δ1 -: Winkel
- δ2 -: Winkel
- L -: Länge
- LH -: Hülsenlängsachse
- LR -: Längsrichtung
- O -: Orthogonale

## Patentansprüche

1. Batterieträger (1) mit einer Batteriewanne (2) und einer Verstärkungsstruktur (16), die außenseitig vor einer Seitenwand (4, 5) der Batteriewanne (2) angeordnet ist, die Verstärkungsstruktur (16) ein Innenprofil (17) und ein Außenprofil (18) umfasst, wobei das Innenprofil (17) im Querschnitt U-förmig konfiguriert ist mit einem Steg (19) und zwei Schenkeln (20, 21) sowie einer Öffnung (22), wobei die Schenkel (20, 21) und die Öffnung (22) des Innenprofils (17) von der Batteriewanne (2) weg weisen und die Öffnung (22) des Innenprofils (17) zumindest längenabschnittsweise durch das Außenprofil (18) geschlossen ist, **dadurch gekennzeichnet, dass** zumindest eine Hülse (24) vorgesehen ist, welche sich zwischen den Schenkeln (20, 21) erstreckt, wobei die Hülse (24) Öffnungen (25, 26) in den Schenkeln (20, 21) verbindet.

2. Batterieträger nach Anspruch 1, **dadurch gekennzeichnet, dass** sich die Verstärkungsstruktur (16) in Längsrichtung (LR) der Seitenwand (4, 5) erstreckt und das Innenprofil (17) und das Außenprofil (18) zumindest auf dem überwiegenden Teil der Länge (L) der Verstärkungsstruktur (16) ein Hohlprofil (23) bilden.

3. Batterieträger nach Anspruch 1 oder 2, **dadurch gekennzeichnet, dass** die Hülse (24) einen oberen und/oder einen unteren Kragen (28) aufweist.

4. Batterieträger nach einem der Ansprüche 1 bis 3, **dadurch gekennzeichnet, dass** die Hülse (24) mehrteilig ist und insbesondere aus zwei Hülsenkörperteilen (49, 50) zusammengesetzt ist.

5. Batterieträger nach einem der Ansprüche 1 bis 4, **dadurch gekennzeichnet, dass** endseitig der Schenkel (20, 21) Fügelaschen (30, 31) vorgesehen sind, woran das Außenprofil (18) gekoppelt ist.

6. Batterieträger nach Anspruch 5, **dadurch gekennzeichnet, dass** zumindest eine Fügelasche (30, 31) in einem Winkel (α) zu einem Schenkel (20, 21) angestellt ist.

7. Batterieträger nach Anspruch 5 oder 6, **dadurch gekennzeichnet, dass** eine obere Fügelasche (30) an einem oberen Schenkel (20) und eine untere Fügelasche (31) an einem unteren Schenkel (21) voneinander weg weisend gerichtet sind.

8. Batterieträger nach Anspruch 7, **dadurch gekennzeichnet, dass** die oberen Fügelaschen (30) und die unteren Fügelaschen (31) zueinander in einem Laschenöffnungswinkel (β) angeordnet sind, wobei der Laschenöffnungswinkel (β) zwischen größer oder gleich (≥) 45 Grad und kleiner oder gleich (≤) 240 Grad, bevorzugt zwischen größer oder gleich (≥) 80 Grad und kleiner oder gleich (≤) 150 Grad und insbesondere zwischen größer oder (≥) 60 Grad und kleiner oder gleich (≤) 120 Grad, bemessen ist.

9. Batterieträger nach einem der Ansprüche 1 bis 8, **dadurch gekennzeichnet, dass** das Außenprofil (18) Fügestege (35, 36) aufweist, welche sich an den Schenkeln (20, 21) des Innenprofils (17) abstützen.

10. Batterieträger nach einem der Ansprüche 1 bis 9, **dadurch gekennzeichnet, dass** zumindest ein Schenkel (20, 21) oder ein Schenkelabschnitt (44, 45) zu einer mit dem Steg (19) gebildeten Orthogonale (O) geneigt verläuft.

11. Batterieträger nach einem der Ansprüche 1 bis 10, **dadurch gekennzeichnet, dass** zumindest ein Schenkel (20, 21) mehrere Schenkelabschnitte (44, 45, 47) aufweist, wobei zumindest zwei Schenkelabschnitte (44, 45, 47) relativ zueinander unterschiedlich ausgerichtet verlaufen.

12. Batterieträger nach Anspruch 11, **dadurch gekennzeichnet, dass** zwei Schenkelabschnitte (44, 45) über eine Biegung (46), eine Krümmung, eine Stufe, einen Knick oder einen Absatz verbunden sind.

13. Batterieträger nach einem der Ansprüche 1 bis 12, **dadurch gekennzeichnet, dass** in der Verstärkungsstruktur (16) Einbauelemente (40) vorgesehen sind.

14. Batterieträger nach einem der Ansprüche 1 bis 13, **dadurch gekennzeichnet, dass** endseitig der Schenkel (20, 21) Fügelaschen (30, 31) vorgesehen sind und das Außenprofil (18) Fügestege (35, 36) aufweist, wobei sich das Außenprofil (18) mit den Fügestegen (35, 36) an den Fügelaschen (30, 31) abstützt und mit diesen punktverschweißt oder punktschweißgeklebt ist.

## Claims

1. A battery support (1) with a battery tray (2) and a reinforcing structure (16), which is arranged on the outside in front of a side wall (4, 5) of the battery tray (2), which reinforcing structure (16) comprises an inner profile (17) and an outer profile (18), wherein the inner profile (17) is configured in a U-shaped cross section with a web (19) and two legs (20, 21) and an opening (22), wherein the legs (20, 21) and the opening (22) of the inner profile (17) point away from the battery tray (2) and the opening (22) of the inner profile (17) at least in lengthwise sections is closed by the outer profile (18), **characterised in that** at least one sleeve (24) is provided which extends between the legs (20, 21), wherein the sleeve (24) connects openings (25, 26) in the legs (20, 21).

2. The battery support according to claim 1, **characterised in that** the reinforcing structure (16) extends in the longitudinal direction (LR) of the side wall (4, 5) and **in that** the inner profile (17) and the outer profile (18) form a hollow profile (23) at least over the predominant part of the length (L) of the reinforcing structure (16).

3. The battery support according to claim 1 or 2, **characterised in that** the sleeve (24) has an upper and/or a lower collar (28).

4. The battery support according to any one of claims 1 to 3, **characterised in that** the sleeve (24) is multi-part and is in particular composed of two sleeve body parts (49, 50).

5. The battery support according to any one of claims 1 to 4, **characterised in that** at the end of the legs (20, 21), joining tabs (30, 31) are provided, to which the outer profile (18) is coupled.

6. The battery support according to claim 5, **characterised in that** at least one joining tab (30, 31) is set at an angle (α) to a leg (20, 21).

7. The battery support according to claim 5 or 6, **characterised in that** an upper joining tab (30) on an upper leg (20) and a lower joining tab (31) on a lower leg (21) are directed away from each other.

8. The battery support according to claim 7, **characterised in that** the upper joining tabs (30) and the lower joining tabs (31) are arranged relative to one another at a tab opening angle (β), wherein the tab opening angle (β) is greater than or equal to (≥) 45 degrees and less than or equal to (≤) 240 degrees, preferably greater than or equal to (≥) 80 degrees and less than or equal to (≤) 150 degrees, and in particular greater than or equal to (≥) 60 degrees and less than or equal to (≤) 120 degrees.

9. The battery support according to any one of claims 1 to 8, **characterised in that** the outer profile (18) has joining webs (35, 36) which are supported on the legs (20, 21) of the inner profile (17).

10. The battery support according to any one of claims 1 to 9, **characterised in that** at least one leg (20, 21) or one leg section (44, 45) runs inclined to an orthogonal line (O) formed with the web (19).

11. The battery support according to any one of claims 1 to 10, **characterised in that** at least one leg (20, 21) has a plurality of leg sections (44, 45, 47), wherein at least two leg sections (44, 45, 47) are aligned differently relative to one another.

12. The battery support according to claim 11, **characterised in that** two leg sections (44, 45) are connected via a bend (46), a curvature, a step, a kink or a shoulder.

13. The battery support according to any one of claims 1 to 12, **characterised in that** built-in elements (40) are provided in the reinforcing structure (16).

14. The battery support according to any one of claims 1 to 13, **characterised in that** joining tabs (30, 31) are provided at the end of the legs (20, 21) and the outer profile (18) has joining webs (35, 36), wherein the outer profile (18) is supported by the joining webs (35, 36) on the joining tabs (30, 31) and is spot-welded or spot-weld bonded to them.

## Revendications

1. Support (1) de batterie avec un bac (2) de batterie et une structure de renfort (16) qui est disposée à l'extérieur devant une paroi latérale (4, 5) du bac (2) de batterie, la structure de renfort (16) comprenant un profilé intérieur (17) et un profilé extérieur (18), le profilé intérieur (17) étant conçu en forme de U en section transversale avec un élément de jonction (19) et deux branches (20, 21) ainsi qu'une ouverture (22), dans lequel les branches (20, 21) et l'ouverture (22) du profilé intérieur (17) sont orientées à l'opposé du bac (2) de batterie et l'ouverture (22) du profilé intérieur (17) est fermée au moins sur certaines portions longitudinales par le profilé extérieur (18), **caractérisé en ce qu'**au moins un manchon (24) est prévu, lequel s'étend entre les branches (20, 21), dans lequel le manchon (24) relie des ouvertures (25, 26) dans les branches (20, 21).

2. Support de batterie selon la revendication 1, **caractérisé en ce que** la structure de renfort (16) s'étend dans la direction longitudinale (LR) de la paroi latérale (4, 5) et le profilé intérieur (17) et le profilé extérieur (18) forment un profilé creux (23) au moins sur la majeure partie de la longueur (L) de la structure de renfort (16).

3. Support de batterie selon la revendication 1 ou revendication 2, **caractérisé en ce que** le manchon (24) présente un collet supérieur et/ou inférieur (28).

4. Support de batterie selon l'une quelconque des revendications 1 à 3, **caractérisé en ce que** le manchon (24) est en plusieurs parties et est notamment composé de deux parties (49, 50) de corps de douille.

5. Support de batterie selon l'une quelconque des revendications 1 à 4, **caractérisé en ce que** des pattes d'assemblage (30, 31) auxquelles le profilé extérieur (18) est couplé sont prévues côté extrémité des branches (20, 21).

6. Support de batterie selon la revendication 5, **caractérisé en ce qu'**au moins une patte d'assemblage (30, 31) est placée à un angle (α) par rapport à une branche (20, 21).

7. Support de batterie selon la revendication 5 ou revendication 6, **caractérisé en ce qu'**une patte d'assemblage supérieure (30) sur une branche supérieure (20) et une patte d'assemblage (31) inférieure sur une branche (21) inférieure sont orientées dans la direction opposée l'une à l'autre.

8. Support de batterie selon la revendication 7, **caractérisé en ce que** les pattes d'assemblage supérieures (30) et les pattes d'assemblage (31) inférieures sont disposées l'une par rapport à l'autre à un angle (β) d'ouverture de patte, dans lequel l'angle (β) d'ouverture de patte est dimensionné pour être compris entre supérieur ou égal à (≥) 45 degrés et inférieur ou égal à (≤) 240 degrés, de préférence entre supérieur ou égal à (≥) 80 degrés et inférieur ou égal à (≤) 150 degrés et en particulier entre supérieur ou (≥) 60 degrés et inférieur ou égal à (≤) 120 degrés.

9. Support de batterie selon l'une quelconque des revendications 1 à 8, **caractérisé en ce que** le profilé extérieur (18) présente des éléments jointifs (35, 36) d'assemblage, lesquels s'appuient sur les branches (20, 21) du profilé intérieur (17).

10. Support de batterie selon l'une quelconque des revendications 1 à 9, **caractérisé en ce qu'**au moins une branche (20, 21) ou une section (44, 45) de branche s'étend de manière inclinée par rapport à une orthogonale (O) formée avec l'élément de jonction (19).

11. Support de batterie selon l'une quelconque des revendications 1 à 10, **caractérisé en ce qu'**au moins une branche (20, 21) présente plusieurs sections (44, 45, 47) de branche, dans lequel au moins deux sections (44, 45, 47) de branche s'étendent de manière orientée différemment les unes par rapport aux autres.

12. Support de batterie selon la revendication 11, **caractérisé en ce que** deux sections (44, 45) de branche sont reliées par une courbure (46), un coude, un étage, un pli ou un épaulement.

13. Support de batterie selon l'une quelconque des revendications 1 à 12, **caractérisé en ce que** des éléments de montage (40) sont prévus dans la structure de renfort (16).

14. Support de batterie selon l'une quelconque des revendications 1 à 13, **caractérisé en ce que** des pattes d'assemblage (30, 31) sont prévues côté extrémité des branches (20, 21) et le profilé extérieur (18) présente des éléments jointifs (35, 36) d'assemblage, dans lequel le profilé extérieur (18) avec les éléments jointifs (35, 36) d'assemblage s'appuie sur les pattes d'assemblage (30, 31) et est soudé par points ou collé par points à ceux-ci.
